Europäisches Patentamt

(19) European Patent Office

Office européen des brevets

(11) EP 0 853 023 A1

(12) **EUROPEAN PATENT APPLICATION**
published in accordance with Art. 158(3) EPC

(43) Date of publication:
15.07.1998 Bulletin 1998/29

(21) Application number: 95941251.1

(22) Date of filing: 11.09.1995

(51) Int. Cl.$^6$: **B60Q 1/44**, B60Q 1/50

(86) International application number:
PCT/RU95/00200

(87) International publication number:
WO 97/10119 (20.03.1997 Gazette 1997/13)

(84) Designated Contracting States:
DE ES FR GB IT

(71) Applicant:
Ivanov, Valery Filippovich
Moscow, 111578 (RU)

(72) Inventor:
Ivanov, Valery Filippovich
Moscow, 111578 (RU)

(74) Representative:
Sparing - Röhl - Henseler
Patentanwälte
Rethelstrasse 123
40237 Düsseldorf (DE)

(54) **METHOD AND DEVICE FOR OPTICAL SIGNALLING IN A VEHICLE**

(57) The proposed method of optical signalling involves the transmission (65) to vehicles situated behind the signalling vehicle of one or more modulation-coded beams, the coding (76) corresponding uniquely to the functions of the optical signals when switched on. In addition, in certain types of vehicle, vehicles situated in front of the signalling vehicle at a distance not greater than a predetermined distance are detected (61); if vehicles are present, the one or more coded beams from them are received (63) by sensors and decoded (63) and the appropriate warning rear optical signals are then activated (75) and coded (76) in accordance with the functions associated with alterations in the movement of vehicles in front. The method can be implemented using a device comprising a coding unit (14) connected to a complementary emitter (8) fitted in the rear part of the vehicle, and to rear optical warning signals (20, 22, 23). In addition, the device can be provided with a decoder (29) connected to an optical or non-optical receiver unit (27) and to the rear optical warning signals (20, 22).

FIG.2

FIG.4

## Description

### Field of invention

The present invention relates to the electronic equipment of vehicles, more precisely to the optic signalling for vehicles and more specifically to the methods and devices designed to control external optical signalling in an automobile.

### Background of the invention

The known methods and devices of optical signalling, used in automobiles and other vehicles (motorcycles, tractors, etc.) provide the emission of various optical signals aiming, at least, at warning motorists against the upcoming manoeuvre of the automobile, its braking and malfunction and against its close proximity to other vehicles.

Most inventions, aimed at modernizing an external optical signalling mainly provide for the increase in its performance and informative level. For instance, in international claim PCT (WO) 93/16899, cl.5B60Q 1/44 and Russian patent 2028221, cl. 5b60Q 1/44, proposed are optical brake-lights, acting immediately after the driver has decelerated, which decreases the time needed to turn on these brake lights. In other invention (international claim PCT (WO) 93/01070, cl. B60Q 1/46) the increase in the informative level is due to the use of regular orange lights of the vehicle to indicate the decelerating in its movement, with the optical signal emission stopping, after the device fixing the deceleration, has returned to the initial position.

In other inventions the increase in informative level is achieved by the use of new methods of turning on the external lights. For instance, US. patent 4,104,281, cl. B60T 1/14 describes the device, in which the mode of emergency braking is identified by sharp brakes applying causing the intermittent mode of brake-light turning-on. In other invention (USA patent 5,132,666, cl. 340-468) the increase in the informative level is due to the use of a special display, installed in the vehicle. Sometimes, to increase the informative level, various sensing elements are used, analyzing the actions and conditions occurring around the vehicle. (patent of Japan 4-79861).

The common drawback of these and other known methods and devices is their inadequate informative level, due to the fact that the motorist, following a car equipped with any known device of optical signalling, cannot see how the optical signalling systems of the vehicles preceding that car, acts. This increases significantly the risk of chain reaction type, multiple vehicle collisions, which amount to 30% to 70% of all registered collisions. There are a lot of inventions, aimed at reducing the effect of this drawback (U.S. patent 5,132,882, cl. 362-80.1, international claim PCT (WO) 93/18939, U.K. patent 2080095, cl. F21V 21/02 and others). The gist of these inventions is to install on vehicles additional alarm lights, for example, stop-lights, in such way that would enable the driver of the preceding vehicle to see them through these vehicles'front screens and rear screens. Also, the use of the additional optical signals does not remove completely the above-mentioned common drawback, a large number of vehicles (trucks, lorries, buses, tractors, etc. ) fully block the luminous flux of additional signals, as these vehicles are totally "opaque" for these signals. Besides it, even through ordinary motor car with high "transparency" it is possible to perceive for certain only those additional optical warning signals transmitted from the vehicle immediately preceding the above motor car, which is absolutely insufficient. Such insufficiency is conditioned by the fact that, in theory, the safe distance between two vehicles approximately equals to half the speed when moving on a dry, horizontal, hard-surfaced road. However, high-density chains of vehicles such distances are not achievable in practice (V. N. Ivanov "The science of driving", Moscow, Transport Press, 1990, p. 150). Therefore, the conditions of traffic in a big city or on a highway require the synchronous braking of all vehicles of the linear chain, if the motorist of the front vehicle in this linear chain applies brakes. This cannot be provided by methods and devices known for today. It also can be proved by the fact that one-way collisions and their worst variant - chain reaction type multiple vehicle collisions, when after a sudden braking of a vehicle, the motorists of vehicles following it have no time to apply the brakes, - account for nearly 95% of all traffic accidents on busy roads with traffic density of 1500/2000 vehicles per hour (M.B. Afanasiev "Traffic for drivers", DOSAAF Press, 1980 p. 45 and p. 120)

Another drawback of the known optical signalling devices is that the motorist of a vehicle moving in the tail-end of the chain of vehicles has no information on the number and size of vehicles preceding this vehicle. But this information is absolutely necessary for the driver willing to overtake. This can be explained by the fact that according to certain rules and regulations (V. N. Ivanov "The science of driving", Moscow, Transport Press, 1990, p. 153) the overtake may be accomplished only when it is known the number of vehicles to overtake in one manoeuvre. The information on length and other parameters of vehicles allows to evaluate with greater precision the overtake distance, as this distance increases by 25% to 50% when overtaking long vehicles (articulated lorry, bus) practice (V. N. Ivanov "The science of driving", Moscow, Transport Press, 1990, p. 158).

### Summary of the invention

The purpose of the present invention is to create an optical signalling system capable to provide motorists of all vehicles in the linear chain with information on optical signalling system work mode in any specified number of vehicles forming the linear chain. The gist of the solution for the set task, according to the invention, is the transmission towards the vehicles following or preceding this vehicle one or several emission fluxes encoded using modulation, coding these emissions in single-valued correspondence with the functionality of the specific optical signals when they are on.

When the optical signalling device is used in a vehicle containing rear optical warning signals, connected to the execution unit, according to the invention, the optical signalling device is equipped with a coding element, connected via its output to additionally introduced emitter, located in the rear part of the vehicle, and via its input - to rear optical warning signals and execution unit. Besides it, the device can be equipped with a decoding element, connected to the receiver unit of optical and non-optical emission, located in the front part of the vehicle so that its beam is oriented towards the direction of the main movement of the vehicle, the output of the decoding element being linked to the corresponding optical warning signals. Besides it, to facilitate the use of this invention with some kinds of vehicles, several options of the use of their regular signalling system are proposed.

The advantage of the above optical signalling method and device is that it virtually totally excludes accidents where vehicles moving in the same direction collide.

Other particularities and advantages of the invention will be clarified in a detailed description and in claims 3-14 and 16-24.

Brief description of drawings

Hereinafter the invention is clarified by the description of specific, but not limiting the invention, embodiments and supporting documents:

Fig. 1 is the front and the rear view of a vehicle;
Fig. 2 is block diagram of the optical signalling system;
Fig. 3 is several options of the external view of the additional optical emitters;
Fig. 4 is the overall block diagram of the algorithm of signalling system;
Fig. 5 is the block diagram of the algorithm of signalling system.

Description of the preferred embodiment

In the description of the above embodiment of the claimed method of optical signalling in a vehicle featured on the drawings, specific narrow terminology is used for lucidity purposes. However, the invention is not limited to the adopted terms and it should be taken into consideration that each such term covers all equivalent elements, operating similarly and used to resolve the same tasks. It should be also noted that hereinafter the term "vehicle" means any moving object, which can participate in the common traffic flow in conformity with fixed traffic rules (motorcycle, bicycle, lorry, tractor, etc.). We refer now to the specific embodiment, explained with the drawings.

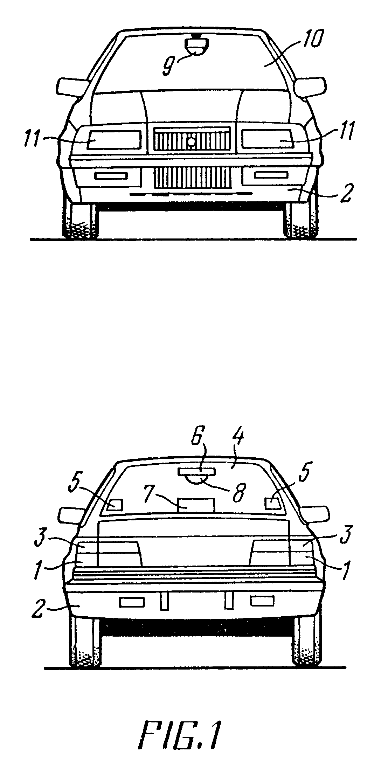

On Fig. 1, digit 1 indicates red regular stop signals of vehicle 2 and digit 3 - regular turning lights representing orange light-emitters. Behind rear screen 4 installed are two orange additional optical warning signals 5, additional stop signal 6 and a CRT 7 with emitter 8 above it, designed to transmit information on the working mode of light emitters 1,3,5,6, CRT 7 and on the type of a vehicle and its overall dimensions, the most important of which is length. Any other options of the installation and the use of the optical signalling system are possible, some of them will be reviewed below. The position of emitter 8 behind the rear screen simplifies the task of its cleaning, which can be accomplished, if necessary, by rear screen-wipers. The receiver of emission 9 is also installed behind windscreen 10, but it can also be installed in any other place protected from dust and humidity, for example inside one or two head-lights 11. To transmit the above-mentioned information any kind of emission, utilized for such purposes, can be used (ultrasonic, electro-magnetic radiation wit energy spectrum within radio-frequency range, infra-red radiation). The most suitable option in this case is the use of infra-red radiation with wave-length of 0,9 to 1,2 micrometre. This can be explained by the fact that in this area of infra-red spectrum we observe the least absorption of emission by the atmosphere polluted with water steam and other exhausts of a moving vehicle. On the other hand, the use of near infra-red simplifies the choice of durable and cheap sources and receivers of incoherent emission. These can be light-emitting diodes and photodiodes, which are semi-conductor elements, comprising alternating conduction region p-n-p. Thus, the specific description of the optical signalling device will be viewed in the context of the use of infra-red radiation as information carrier in this device. Structurally emission receiver 9 must then consist of a case with optical system and a photodiode inside, the latter being used as infra-red radiation sensor. Other options allow the use of the fibre-optic path, designed as light conductor with one end conjugate to the optical system and the other end with an installed photosensor, for instance photodiode, as emission receiver 9. Emitter 8 may consist of one or several light-emitting diodes used as infra-red emission sources, and an optical system generating a divergent beam, directed towards the adjacent vehicles.

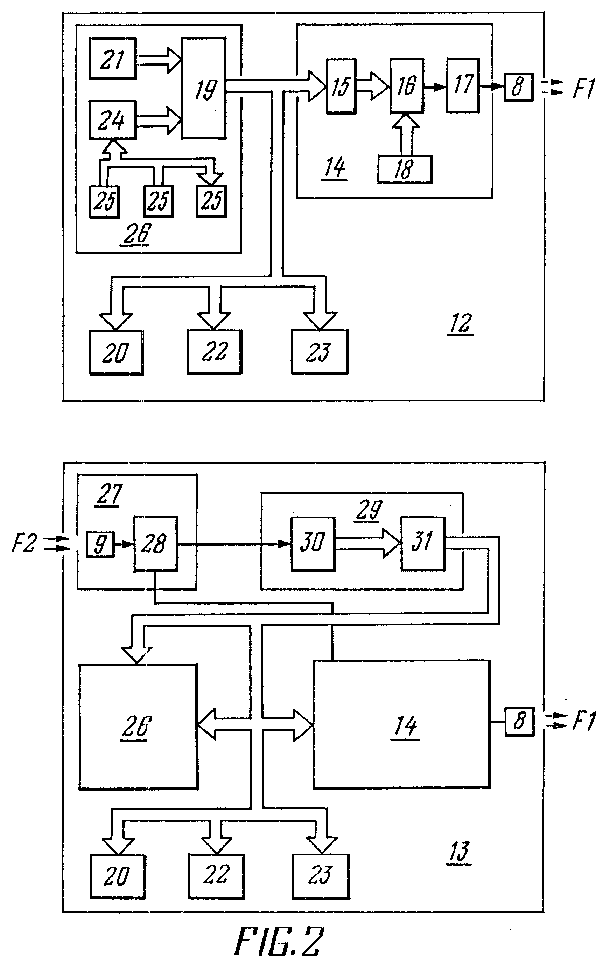

Fig. 2 is a block diagram of vehicle 2 optical signalling system, installed on two vehicles. The block diagram of the first vehicle optical signalling system is marked with 12, of the second vehicle - with 13. It should be noted that the integral part of the optical system in any vehicle is coding element 14, connected to emitter 8. This can be explained by the fact that some types of vehicles (a car with a folding head, motorcycle, etc.) do not block to the motorist of the vehicle following after them, the view of the road ahead. In this case, such vehicles are only required to provide other vehicles with information on their type and movement mode, optical information providing concerning optical signalling system initiated on the preceding vehicle being unnecessary, as it can be directly observed by the driver of the following vehicle. Coding element 14 consists of switch 15, coding device (encoder) 16 and modulator 17, connected to emitter 8 of emission flux F1. The coding element can also contain switch 18 of the vehicle type. Emitter 8 consists of emission source with optical system and of a guiding device, designed to stabilize the emission generated by this emitter. The input of coding element 14 is connected via a dataway with the input of execution unit 19 included in optical signalling system of each vehicle. Execution unit 19 provides for activating of corresponding regular signal lights (20) after the driver has initiated organoleptically its controlling elements 21 (brakes and the control lever for turning lights) or for activating additional optical signals 22 and for controlling circuit 22 connection via CRT 7 to corresponding sensor 25 to the source of information necessary to be communicated to other motorists when there are signals coming from the known additional devices some vehicles can be equipped with. The example of this device is the known indicator of safe distance, generating a signal when a vehicle is within the unsafe distance with other vehicle. The standard indicator comprises microcontroller 24 with sensors 25 connected to it, measuring at least such parameters as speed, pavement status, distance to other vehicles. The inclusion in block diagram 26, making a part of any vehicle, of optical signalling system elements 24 and 25 facultative for now, is due to author's wish to highlight the general character of the use of this invention. Emitter 8 can include a guiding device of output emission flux F1 stabilization. Besides it, as it will be shown below, to simplify the measuring of distance between moving vehicles (if range-finder is not present), optical signalling device can be equipped with two additionally introduced emitters 8, installed at some distance from each other in the rear part of the vehicle. Block diagram 13 comprises receiver unit 27, including flux F2 receiver of emission 9, connected to circuit 28, providing for preamplification and preprocessing, and connected to decoding element 29 (decoder), consisting of decoder 30 and matching unit 31. The output of decoding element 29 (output control bus) is connected to optical emitters 20, 22 and to controlling circuit 23 via the CRT of the second vehicle. Also, this control bus is connected to the input of coding element 14. All additional elements, introduced into optical signalling system and marked with 14, 27, 28, 29 are known and can be manufactured according to standard circuits with the possibility to use standard microprocessor system (MPS) as elements 14 and 29.

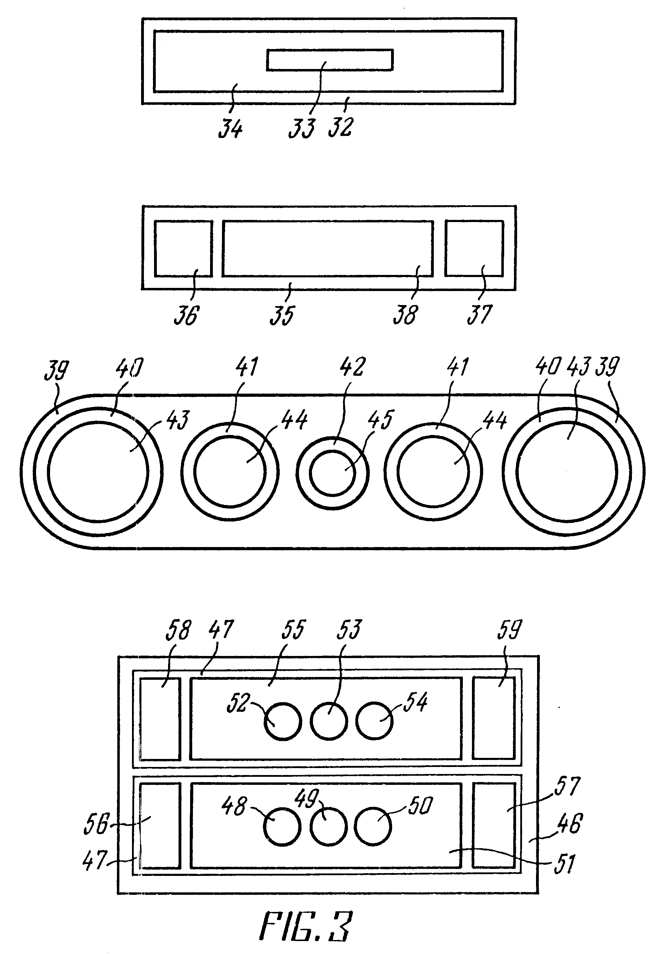

Fig. 3 is the general view of four options (except those presented on Fig. 1) of the design of additional optical signals, installed on the rear part of the vehicle. Additional optical signal 32 consists of two rectangular optical emitters, emitter 33 being installed inside emitter 34. The most suitable colour is orange for emitter 33 and red for emitter 34. Additional optical signal 35 consists of two orange emitters 36,37, installed on both sides of red emitter 38. Additional optical signal 39 consists of several emitters 40,41,42, designed as red and orange circles with red and orange optical emitters 43,44,45. Additional optical signal 46 is designed as twin optical signals 47, similar in terms of construction with signals 32, 35 and placed one above the other. Each optical signal 47 differs from the described signals 32 and 35 in the using, instead of optical emitter 33 installed inside emitter 34 emission plane, several orange, red or otherwise coloured emitters, three of which - 48,49,50 - are installed inside emitter 51 emission plane, and three others - 52,53,54 - inside optical emitter 55. Orange emitters 56,57 and 58,59 are installed on both sides of emitters 51 and 55. Each optical emitter, included in additional signals 32,35,39 and 46 is connected to decoding element 29.

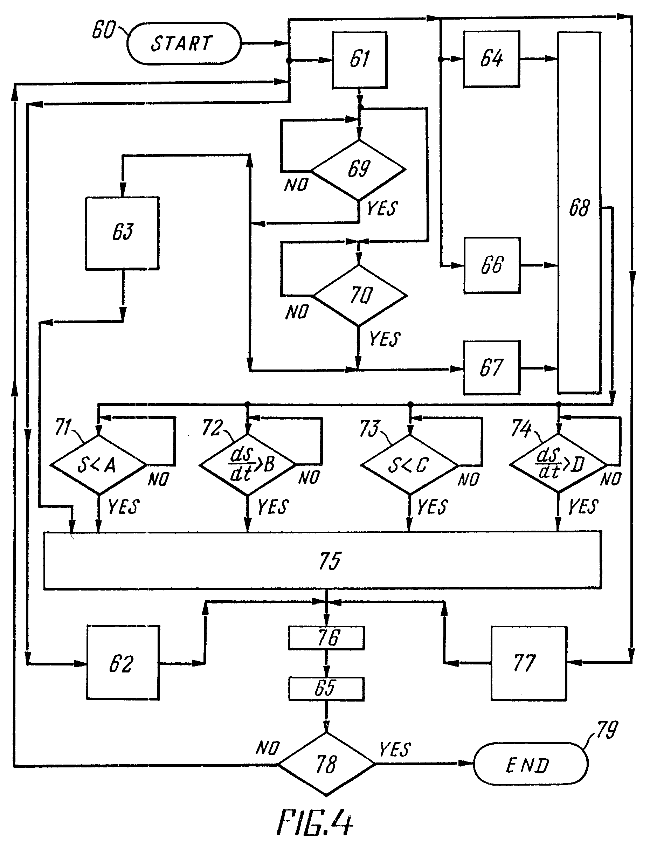

Fig. 4 is the overall block diagram of the algorithm of signalling system. We shall now explain the numeration not present on Fig. 4. Number 61 designates the action of Detection of vehicles preceding and following vehicle 2 at a distance not bigger than specified, 62 designates the action of Activating regular optical signalling of vehicle 2, 63 designates the condition of Emission reception and decoding, 64 designates the action of Measuring and input of vehicle 2 friction coefficient and speed, 65 designates the action of Emission flux F1 modulating, 66 designates Measuring and input of the parameter, characterizing the level of roadbed inclination, 67 designates the action of Measuring and input of S, 68 designates the action of Calculation of admissible values of S, dS/dt, S0, 69 designates the condition Is there a vehicle preceding vehicle 2 at a distance S<S0?, 70 designates the condition Is there a vehicle following vehicle 2?, 75 designates the action of Activating of corresponding optical signals, 76 designates the action of Coding of electric signals according to the functions of optical warning signals, 77 designates the action Turn Switch 18 to the necessary position?, 78 designates the condition Has vehicle 2 stopped moving?.

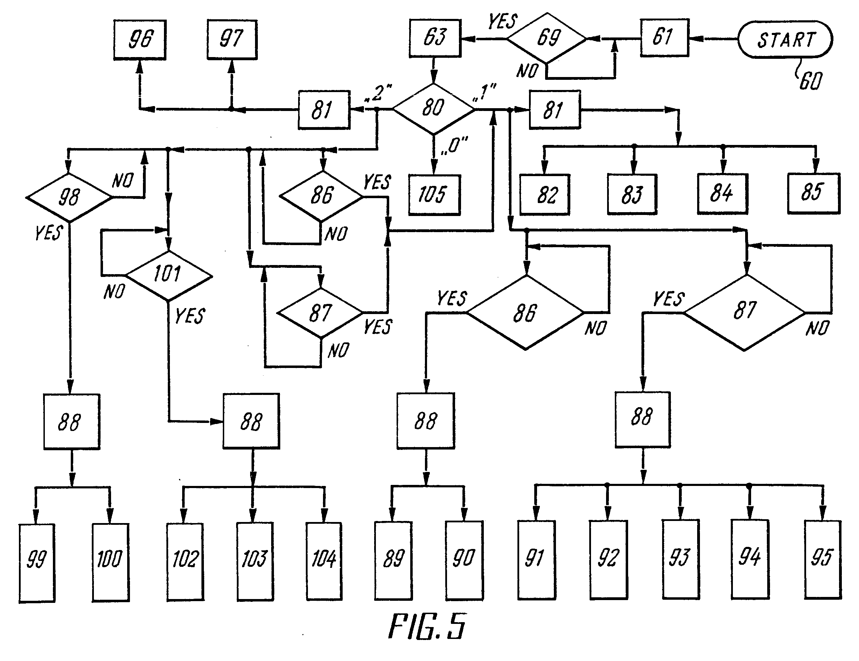

Fig. 5 is the block diagram of the algorithm of signalling system. We shall now explain the numeration not present on Fig. 5. Number 80 designates the condition How many vehicles are preceding vehicle 2, 81 designates the action of the Choice of indicating method of vehicle availability, 82 designates the action Optical emitter 33 is on, 83 designates the action of simultaneous activation of two optical emitters 36 and 37 for permanent irradiance, 84 designates the action of Optical emitters 40 activating, 85 designates the action of Activating, in conformity with the type of the vehicle, of one or several optical emitters, designated with numbers 48,49,50, number 86 designates the condition Is the a turning light on?, 87 designates the condition "Is a rear stop signal on?, 88 designates the action of the Choice of indicating method, 89 designates the action of Turning for irradiance of one of the following optical emitters : 36,37,56,57, number 90 designates the action of Turning for flashing mode of one of the following optical emitters : 5,36,37,40,56,57, number 91 designates the action of Activating of one of the following optical emitters: 6,34,38,43,51, number 92 designates the action of Digit "0" or digit "1" displaying on CRT 7, number 93 designates the action "Activating of two optical emitters 3, number 94 designates the action of Simultaneous activating of optical signals 1 and 3, number 95 designates the action of Simultaneous activating of optical signals 5, number 96 designates the action of Activating, in conformity with the type of the vehicle, of one or several optical emitters, designated with numbers 52,53,54, number 97 designates the action of Simultaneous activating of optical signals 58,59 or 41, number 98 designates the condition Is the turning light of the preceding vehicle on?, 99 designates the action of Activating for continuous lighting of optical emitter 58 or 59, number 100 designates the action of Turning to flashing mode of optical emitter 58 or 59, or left (right) emitter 41, number 101 designates the condition Is the rear stop signal of the second preceding vehicle on?, number 102 designates the action of Activating optical emitters 44 or optical emitter 55, number 103 designates the action of Displaying of digit "1" or "2" on CRT 7, number 104 designates the action of Simultaneous activating of optical emitters 3, number 105 designates the action of Indicating of the lack of any preceding vehicles.

The work of optical signalling system is performed under the block diagram, presented on Fig. 4. After the beginning of the movement (the completion of action 60), the simultaneous performance of actions 61,62,64,66,77 is possible. The performance of action 61 is linked to the detecting of other vehicles following and preceding vehicle 2. The distance of detecting of another vehicle must not be bigger than specified. The performance of action 62 is linked to the lighting of vehicle 2's proper (regular) optical warning signals, after the activating of controlling elements by the driver, resulting in voltage applying from the output of execution unit 19 to regular optical signals 20. In the simplest embodiment execution unit 19 consists of electronic interrupting relay of indicating lamps of turning lights and electric contacts, linked with breaking pedal and to regular stop signal lamps. The performance of actions 64,66,67 and of conditions 69-74 is linked to the generating of additional warning signals or the displaying of a warning message on CRT 7 (action 75). The performance of action 75 is made if the admissible value A of distance S ("YES" in condition 71) decreases or the admissible value B of the speed ("YES" in condition 72) of closing with a preceding vehicle is exceeded. Similarly, the performance of action 75 is made if the admissible value C of distance S ("YES" in condition 73) decreases or the admissible value D of the speed ("YES" in condition 74) of closing with a following vehicle is exceeded. Action 68 designates the process of calculation in microcontroller 24 of admissible values of distances S and speeds of closing dS/dt. The data necessary for calculation goes from various standard sensors 25. The necessary actions, providing for the minimum of data for calculation, are usually the measuring of friction coefficient and the speed of the vehicle (action 64), the measuring of the parameter, characterizing the level of roadbed inclination (action 66), the measuring of S (action 67). The measuring of distance S to other vehicles (action 67) is made if these vehicles are available at the specified distance ahead ("YES" in condition 69) and behind ("YES" in condition 70) of the vehicle. The performance of action 75 when the unsafe condition arises ("YES" in conditions 71-74) can result in the lighting of both regular optical signals 1,3 and additional optical signals 5,6,7,32,35,39,46. After activating any of vehicle 2 warning optical signals, the transmission (action 65) of one or several emission fluxes F1, encoded with modulation, is effectuated in the direction of preceding or following vehicles, the coding (action 76) of this emission being made in one-to-one correspondence with those functions accomplished by corresponding optical signals when there are activated. The encoding of emission, transmitted in the direction of other vehicles can be made using a number of the known methods. The most suitable one, in author's view, id the use of a known method of emission encoding, based on the use of pulse-code modulation (PCM). The advantages of this means of data transmission are high noise immunity and the possibility to transmit a large number of commands with little energy-consuming to transmit a command. The coding of transmission in this case may be effectuated as follows.

When switch 15, which can be designed as an assembly of electronic keys, whose sequential activating is effectuated with a standard control circuit, operates, controlling inputs of control circuit 23 of CRT 7, outputs of execution unit 19 and each optical emitter, included in optical signals 20, 22 are sequentially connected to the corresponding input of coding device 16. When voltage resulting from the activating of one or other optical emitter or from the displaying of information on CRT 7 is applied on one or several inputs of coding device 16, it generates a series of impulses with intervals of duration changing as a function of what inputs of coding device 16 receive tension from the above-mentioned sources. Therefore, to each kind of optical signal corresponds a pack of pulses, consisting, as a rule, of a preliminary, launching, stopping and several information pulses. Several information pulses are allocated to transmit an address, other - to transmit a command. The duration interval between information pulses may vary according to the binary code. To logic zero corresponds to the main interval of time T (for example, T=150 ms), and to logic one - 2T. Pulses, generated by coding device 16 goes to modulator 17, which increases their power, necessary for the work of infra-red source, included in emitter 8. The necessity to use a modulator, designed as a power amplifier, is due to the fact that the output stage of coding device 16, assembled, as a rule, in one integrated circuit, cannot provide strong load current. It should be noted, that in some simple cases, the optical emission of rear optical signals of a car can be modulated when they are being switched on, the law of modulation must be in one-to one correspondence with the function, performed by this optical signal, i.e. the same incandescent lamp, used to transmit the warning optical signal is used as the source of the encoded emission flux. It is possible, in this case, by changing the current of its filament to modulate the emission of the lamp. The rate of each lamp filament current change, included in different optical signals, must also be different. The diagram presented on Fig. 4 shows that the transmission of encoded emission (action 65) can occur not only when optical signalling system is activated (actions 62 and 75), but also when switch 18 is being moved to one of its position, which determines the type of the vehicle and its external parameters, which it has after the beginning of its movement (after the completion of action 60). To each position of switch 18 (for this very vehicle) may correspond such parameters, which can arise during use of this vehicle (change of vehicle's length because of trailer, emergency towing of the vehicle, loading with non-standard cargo, etc.

It was mentioned above, that the necessary part of optical signalling device, installed into a "non-transparent" vehicle, are the sensors to receive an encoded emission flux and a decoder, connected to the rear light signals. The overall block diagram, installed in such vehicle (Fig. 2), is marked with 13. To receive and to preprocess the encoded emission, receiver unit 27 is used, containing emission receiver 9, connected to standard circuit 28 providing for amplification and preprocessing (filtration) of the signal, coming from emission receiver 9. Decoding unit (decoder) 29 contains working memory, read-only memory, a generator, input-ouput ports and other circuits, and decodes the signal coming from the output of circuit 28. Decoder 29 contains decoder 30 and matching unit 31, designed to initiate optical signals 20,22 and CRT 7. After decoding of the signal in the outputs (for example, in three outputs) of decoder 30 voltage pulses arise, which are applied to the controlling inputs of matching unit 31, whose corresponding outputs are connected to the sources of optical emission and controlling inputs of controlling unit 23. Depending on the code, i.e. combination of the above-mentioned voltage pulses, coming from decoder 30 to the input of matching device 31, the corresponding output of matching device 31, connected, for instance to optical emitter, receives the 12 V voltage causing this optical emitter to illuminate. Similarly, a digit can be displayed on CRT 7. It should be noted, that coding and decoding can be performed on a programming level. In this case, standard microprocessor systems (MPS) or standard microcontrollers of PCA84C84OP-BE2A3, MSO436-616SP, MAA4004 type, used in television equipment, can be used as decoding unit 29 or decoder 30. If a standard television microcontroller is used as decoder 30, matching unit 31, besides amplifying the current, will delay the cutting of power supply from the source of optical emission. This is due to the fact that the command of confirmation of illumination of one or other optical emitter comes only from a single pack of pulses, which repeats after some period of time, related to the work of switch 15.

We will examine now some options (FIG. 5) of turning on of rear optical warning signals, installed only on two preceding vehicles, as the author of this invention believes that to achieve the safe movement of a chain of vehicles it is sufficient for any driver of this chain to have information on the mode of work of optical signalling system of at least three vehicles, preceding the current vehicle. However, the quantity of such vehicles can be virtually unlimited. If within the set distance there are vehicles preceding vehicle 2 ("YES" in condition 69), equipped with this signalling system, choice of the display method of these vehicles availability (action 81) is possible, as well as choice of the display method their optical signalling systems work mode (action 88). The choice of these methods depends on the availability of additional optical signals, as well as on their design. If a standard range-finder is used as one of the sensors, then in our further description we will imply additional signals 32,35,39,46, yet any other options of their construction design. The detection of minimum distance S0 (condition 69) allowing the capturing of the preceding vehicle (action 61) and the activating of its optical signalling system can be performed by microcontroller 24, multiplying value A by the correction factor. If microcontroller 24 is not present, the approximate value of S0 can be calculated by incorporating a threshold element into circuit 28 or circuit 30. Then with the preset beam and with the stabilizing of infra-red emission flux, coming from emitter 8, the value of the signal coming out of the preamlifier will change according to the distance between two vehicles. When the distance between vehicles decreases, the signal value increases and when it reaches the S0 value, the threshold element is activated, allowing the activation of decoder 29. If it is necessary to adjust S0 value according to the speed, the controlling input of threshold element must be linked with speed sensor of the vehicle. Author believes that S0 value must be within $V/2 < S0 < V$, where V is the speed of movement. When condition 69 is achieved, microcontroller 24 generates a permission signal to enter execution unit 19, which "permits" the activating of optical signalling system elements 20,22,23 provided there are corresponding signals in the output of decoder 29. If one (first) vehicle is preceding vehicle 2 ("1" in condition 80), its indication can be performed by one of the following actions : activation of optical emitter 33 (action 82), simultaneous activation for permanent irradiance of emitters 36, 37 (action 83), activation for permanent irradiance for permanent irradiance of annular emitters 40 (action 84). As it was demonstrated, the best option for the driver is such volume of the information on the vehicle, which view is blocked by the immediately preceding vehicle, which includes the type of this vehicle. By activating (action 85) optical emitters 48,49,50, installed in optical signal 46, it is possible to transmit information on the type of the vehicle and on its size. We will consider, as an example, one of the variants of illuminating of these optical emitters. According to this variant, if vehicle 2 is preceded by a motor car, emitter 49 illuminates, if vehicle 2 is preceded by a lorry, emitters 48 and 50 illuminate and if vehicle 2 is preceded by an oblong vehicle (for example, a lorry or a motor car with a trailer) all three emitters 48,49,50 illuminate. If vehicle 2 is preceded by a motorcycle, emitter 49 switches to the flashing mode, while emitters 48 and 50 are not activated. If a preceding vehicle activates its turn-signal ("YES" in condition 86), one of optical emitters 36,37,56,57 and left or right emitter 5 illuminate and continue to light, or one of optical emitters 36,37,56,57 and left or right emitter 5 or 40 illuminate and to flash (action 90). When the preceding vehicle illuminates its warning stop-signals ("YES" in condition 87) one of optical emitters 6,34,38,43,51 illuminates (action 91) or "0" or "1" are displayed (action 92) on CRT 7. Some cases allow for the option when regular warning turn-signals 3 illuminate simultaneously (action 93) or regular turn-signals 3 and stop-signals 1 illuminate simultaneously (action 94). If the vehicle is equipped with additional turn-signals 5, their simultaneous illumination (action 95) is also possible. If there are no vehicles preceding vehicle 2 within the set distance S0 ("0" in condition 80), an optical signal, for example green one, can be activated (action 105) on the rear part of vehicle 2. This signal simplifies the driver's calculation when he takes a decision to begin overtaking, as it excludes the uncertainty in regards to the presence/absence of other vehicles ahead of the vehicle to be overtaken. If there are two vehicles preceding vehicle 2 ("2" in condition 80), the second vehicle can be indicated with one of the following means: activation of one of optical emitters 52,53,54 (action 96), simultaneous activation of two emitters 58,59 or 41 (action 97) for permanent lighting. The type and the size of the second vehicle can be determined in the same way as the type and the size of the first vehicle - by illuminating corresponding optical emitters 52,53,54. When the second preceding vehicle illuminates its optical turn-signals ("YES" in condition 98), it causes the activation and permanent lighting of one of optical emitters 58,59, or their flashing, as well as the flashing (action 100) of left or right emitter 41. When the second preceding vehicle illuminates its warning stop-signals ("YES" in condition 100), it causes the activation of one of optical emitters 44,55 (action 102) and the displaying of digit "2" ("1") on CRT 7 (action 103). The displaying of the illumination of the second vehicle's stop signals when vehicle 2 is not equipped with additional emitters, can be performed by simultaneous illumination of its regular turn-signals 3 (action 104). In this case, the displaying of illumination of the first vehicle's stop-signals must be performed by action 94. The expedience of using additional stop-signals, based on the above-mentioned principles, must be taken into account. This is due to the fact that the use of only CRT 7 (which can performed other functions, such as indication of the distance to the preceding vehicle) to indicate the illumination of the preceding vehicles' stop-signals, does not provide the whole information on the kind of the reason which caused their deceleration, as when several vehicles are decelerating simultaneously, for example at a traffic light, CRT 7 will display only one digit "1", related to the nearest car to vehicle 2. The use of more sophisticated CRTs with several bits is, in author's view, not efficient, as it adversely affects the attention of the driver of the following vehicle. At the same time, the proposed designs of additional optical signals, for example option 39, do not provide for message redundancy and are well perceived by drivers of other vehicles. This is explained by the fact that the arrangement of emitters 40-45 and their size corresponds to the law of perspective representation of the objects. In fact, after the illumination of stop-signals of the farthest (the third) car from vehicle 2, optical emitter 45, having the smallest size, will be activated, while after the illumination of stop-signals of the nearest (the first) car from vehicle 2, the biggest optical emitters 43 with the longest distance between them, will be activated.

The equipment of vehicles with this optical signalling system can provide a number of advantages, one of which is virtually total exclusion of such accidents where vehicles moving in the same direction collide. This is due to the fact that regardless of the number of vehicles in the chain, even if the driver of the first vehicle in the chain applies the brakes suddenly, for example, at a traffic light, the deceleration of the other vehicles in this linear chain will be effectuated with a high level of synchronism. Another advantage of this invention is that after a vehicle is equipped with these additional signals, for example signal 39, the driver of the following vehicle can see the increase in his speed of reaction. This is due to the fact that in most cases the illumination of stop-signals of a preceding vehicle is anteceded by a sequential illumination of other preceding stop-signals. According to this invention, this causes a sequential illumination of emitter 45, then emitter 44 and, finally, emitter 43. The sequential illumination of emitters, located on the additional optical signal of the vehicle, prepares the driver of the following vehicle to the possible braking, which, apparently, considerably increases this driver's speed of reaction. Yet another advantage of this invention is the possibility of safer overtaking of the preceding vehicles, as the driver of the overtaking vehicle, first, has the information on the quantity and the type of the vehicles located in the area of overtake, and second, the information on the possible manoeuvre ,undertaken as a rule as a sudden left turn ( when there is right driving). It can be finally noted that the use of the invention even in its simplest design, when by activating of single additional optical signal 6, the illumination of only one preceding vehicle's stop-signals is fixed, can be very efficient, as most vehicles are completely "opaque".

It should be taken into consideration that the embodiment of the invention, shown on the drawings and described above, is only the preferred embodiment. Various options as to the format, size, arrangement and activation of separate elements, in particular, of additional optical warning signals. For instance, to fix more definitely the illumination of the preceding vehicles' stop-signals, when optical emitters 34,43,44,45,51,55 illuminate, optical emitters 33,40,41,42,48,49,50,52,53,54 immediately go out. In some cases, to warn the driver of the preceding vehicle of the beginning of overtake of this vehicle, it is expedient to transmit additional information emission not only in the direction of the following vehicle, but also in the direction of the preceding vehicle. As the main carriers providing information on traffic mode are traffic lights, in front of which first decelerate vehicles heading the linear chain of vehicles, in some cases it is advisable to transmit in their direction an encoded emission after the illumination of a warning signal of the traffic lights, for example, of the red signal, and after the reception and decoding of this signal by vehicle 2, to illuminate its rear warning signals, corresponding to the illumination of the preceding vehicle's stop-signals. Other options of vehicle 2 rear warning signals illumination are possible. For example, when distance to the preceding vehicle changes, gating surface of emitters 40,41,42 can vary. The elements shown on the drawings and described above can be substituted by the equivalent ones, can be used independently of other elements, yet being within the essence or the scope of the invention, formulated in the patent claims.

Applicability

The invention can be used in all vehicles, equipped with optical signalling system. The most considerable effect can be achieved out of using this invention with the vehicles, used in the conditions of intense traffic on the highways. The manufacturing of the car optical signalling system can be undertaken, for example, by car-making companies.

**Claims**

1. The method of optical signalling in a vehicle (2), consisting of transmitting (62) different optical signals, designed, at least, to warn drivers of the upcoming manoeuvre of the vehicle, of its braking or malfunction, as well of a dangerous approach ("YES" in conditions 71-74) of vehicle 2 to other vehicles, characterized in that a coded modulation of a vehicle emission is performed, each of code of this emission corresponding to a function, being assigned (65) by the optical emission of this vehicle, with the modulated emission fitted to be received and decoded by other vehicle.

2. The method of optical signalling in a vehicle of claim 2, characterized in that optical emission of rear optical signals of the vehicle is modulated (76) when they are activated, the modulation law of each optical signal being in one-to-one correspondence with the function, performed by this optical signal.

3. The method of optical signalling in a vehicle of claim 1 or 2, characterized in that additional change in optical emission parameters is made or additional coding of information emission is made according to the type and the size of e vehicle, which are assigned (77) by a special switch (18).

4. The method of optical singalling in a vehicle of claim 1, 2 or 3, characterized in the detection of vehicles preceding or following the vehicle at a distance not exceeding the preset distance, and when vehicles are present, in the reception (63) using sensors of one or several encoded emission fluxes, in the decoding (63) of this emissions, the afterward activation of corresponding rear optical vehicle signals, which, in turn, are encoded (76) according to the functions related to the change of movement mode of the preceding vehicles.

5. The method of optical signalling in a vehicle of claim 4, characterized in the determination (68) of a distance between the vehicle and other preceding or following vehicle, comparison (71-74) of this distance with the admissible distance, and taking a decision, based on the results of the comparison, to activate (75) and to encode (76) the corresponding optical signalling system.

6. The method of optical signalling in a vehicle of claim 4, characterized in the activation (91) of one or several additional stop signals, placed above the regular stop-signals of the vehicle, when the preceding vehicle illuminates its stop-signals.

7. The method of optical signalling in a vehicle of claim 4, characterized in the continuous illumination (89) or intermittent (90) illumination of one of the two additional orange signals, placed above the regular stop-signals of the vehicle, when a preceding vehicle illuminates its optical turn-signals.

8. The method of optical signal in a vehicle of claim 4, characterized in the simultaneous activation of two regular (3) orange optical emitters, placed on both sides of the vehicle, when the preceding vehicle illuminates its stop-signals.

9. The method of optical signalling in a vehicle of claim 4, characterized in the simultaneous illumination of a stop-signal and two orange optical signal (3), placed on both sides of the vehicle, when the preceding vehicle illuminates its stop-signals.

10. The method of optical signalling in a vehicle of claim 9, characterized in the simultaneous activation (104) of two regular (3) orange optical signals, placed on both sides of the vehicle (2), when the preceding vehicle illuminates its stop-signals.

11. The method of optical signalling of claims 4-10, characterized in the illumination (105) of additional rear green signal, when there is no vehicles preceding the vehicle at the same distance.

12. The method of optical signalling in a vehicle of claims 4-11, characterized in the identification of the type of a vehicle and afterward display on the known CRT (7), placed at the back of the vehicle, a symbol or a letter, corresponding to the type of the vehicle.

13. The method of optical signalling in a vehicle of claims of claims 4-12 characterized in the displaying (92) on the known CRT, located at the back of the vehicle, of the index number of the preceding vehicle which illuminated its stop-signal.

14. The method of optical system in a vehicle of claim 1, characterized in the determination of the speed of the diminution in distance between the vehicle and a preceding or following vehicle, calculation (68) of the admissible speed of distance diminution between the vehicle and a preceding or following vehicle, comparison (72,74) of the diminution speed with the admissible speed, and taking a decision, based on the results of the comparison, to activate (75) and to encode (76) the corresponding optical signalling system.

15. The optical signalling device in a vehicle, containing rear optical warning signals (20,22,23), connected to the execution unit (19), characterized in having a coding element (14) whose output is connected to the additional emitter (8), located at the back of the vehicle, and whose input is connected to the rear optical warning signals (20,22,23) and to the execution unit (19).

16. The optical signalling device in a vehicle of claim 15, characterized in having two additional emitters (8), mounted at some distance from each other at the back of the vehicle.

17. The optical signalling device in a vehicle of claim 15, characterized the output coding unit (14) being linked to the rear optical warning signals (20,22).

18. The device of optical signalling in a vehicle of claims 15-17, characterized in having a decoding element (29), connected to the receiver unit (27) of optical and non-optical emission, installed in the front side of the vehicle so that its beam is directed towards the main movement of the vehicle , the output of the decoding element (29) being connected to the corresponding back optical warning signals (20,22).

19. The device of optical signalling in a vehicle of claim 18, characterized in an additional range finder, installed in the front side of the vehicle.

20. The optical signalling device of claim 18 or 19, characterized in being additionally equipped with a known CRT (7), whose beam is directed opposite to the direction of the main movement of the vehicle, connected to the output of the decoding element (29).

21. The device of optical signalling in a vehicle of claims 18-20, characterized in an additional stop-signal being designed as independent ring-shaped nested emitters (40), (43) of a specified geometric form, each of these emitters being connected to the output of the decoding element (29).

22. The device of optical signalling in a vehicle of claims 18-21, characterized in the additional rear optical warning signal (39) being designed as a horizontal row of independent emitters (43, 44, 45), each of these emitters being connected to the output of the decoding element (29).

23. The device of optical signalling in a vehicle of claims 18-22, characterized in the additional rear optical warning signal (32) being designed as an optical emitter (34), inside the area of emission of which there is one (33) or several (48-50) other emitters, each of these emitters being connected to the output of the decoding element (29).

24. The device of optical signalling in a vehicle of claims 18-23, characterized in the rear additional optical warning signal (46) consisting of a vertical row of similar optical signals (47), each of which being connected to the output of the decoding element (29).

FIG.1

FIG.2

FIG.3

*60* START → 61

69 NO / YES

70 NO / YES

63

64

66

67

68

71 $S < A$ NO / YES

72 $\dfrac{dS}{dt} > B$ NO / YES

73 $S < C$ NO / YES

74 $\dfrac{dS}{dt} > D$ NO / YES

75

62

76

65

77

78 NO / YES → END *79*

FIG.4

FIG.5

## INTERNATIONAL SEARCH REPORT

| International application No. |
| --- |
| PCT/RU 95/00200 |

**A. CLASSIFICATION OF SUBJECT MATTER**

IPC6: B60Q 1/44, 1/50

According to International Patent Classification (IPC) or to both national classification and IPC

**B. FIELDS SEARCHED**

Minimum documentation searched (classification system followed by classification symbols)

IPC6: B60Q 1/26,1/44,1/50,9/00

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | DE, A1, 3643169, (NABA VINEGAD, IRENE), 30 June 1988 (30.06.88) | 1-14,15-24 |
| A | DE, A1, 4020610 (SCHREIBDER, HANS, Dr.Dr.,) 2 January 1992 (02.01. 92) | 1-14,15-24 |
| A | FR, A1, 2624454 (JEAN-LOUIS BOUCHERON), 16 June 1989 (16.06.89) | 1-14,15-24 |
| A | DE, A1, 3431898 (ERNST,HANS-HELLMUT, Dipl.-ING.), 13 March 1986 (13.03.86) | 1-14,15-24 |
| A | DE, A1, 3909305 (VARIO-TECH GMBH), 3 August 1989 (03.08.89) | 1-14,15-24 |

☐ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 10 April 1996 (10.04.96) | 23 April 1996 (23.04.96) |
| Name and mailing address of the ISA/ <br><br> RU <br> Facsimile No. | Authorized officer <br><br><br> Telephone No. |

Form PCT/ISA/210 (second sheet) (July 1992)